# EUROPÄISCHE PATENTANMELDUNG

(11) **EP 4 678 388 A1**
(43) Veröffentlichungstag der Anmeldung: **14.01.2026**
(21) Anmeldenummer: 25177331.3
(22) Anmeldetag: 19.05.2025
(51) Int. Cl.: B32B 1/08, B29D 23/00, B32B 5/02, B32B 5/26, F16L 11/02, F16L 55/165

(54) **VERBUNDSCHLAUCH ZUR AUSKLEIDUNG VON FLUIDLEITUNGEN, VERFAHREN ZUR HERSTELLUNG EINES DERARTIGEN VERBUNDSCHLAUCHES UND VERFAHREN ZUR REPARATUR UNDICHTER FLUIDLEITUNGEN MIT EINEM SOLCHEN VERBUNDSCHLAUCH**

(30) Priorität: 12.07.2024 DE 102024119836
(71) Anmelder: Cuylits Holding GmbH, 49593 Bersenbrück (DE)
(72) Erfinder: Cuylits, Diederik, 49593 Bersenbrück (DE)
(74) Vertreter: Dr. Binder & Binder GbR

(57) **Zusammenfassung**

Es wird ein Verbundschlauch (1) zur Auskleidung von Fluidleitungen (2) vorgestellt, der ein vollständig mit einer Folie (3) umschlossenes, schlauchförmiges, mittels eines Strickverfahrens oder Webverfahrens hergestelltes und mit einem aushärtbaren Harz getränktes Fasertextil (4) umfasst und erfindungsgemäß dadurch gekennzeichnet ist, dass das Fasertextil (4) aus Naturfasern, wie Hanffasern, Sisalfasern, Leinenfasern, Kokosfasern, Kenaf-Fasern, cellulotische Fasern, Recyclingfasern aus Alttextilien oder Mischgarnen oder aus recyclingfähigen Chemiefasern, wie Viskose-, Modal- oder Lycocell-Fasern besteht oder diese aufweist.

Die Erfindung betrifft ferner ein Verfahren zur Herstellung eines derartigen Verbundschlauches sowie ein Verfahren zur Reparatur undichter Fluidleitungen mit einem solchen Verbundschlauch.

## Beschreibung

Die Erfindung betrifft einen Verbundschlauch zur Auskleidung von Fluidleitungen, ein Verfahren zur Herstellung eines derartigen Verbundschlauches und ein Verfahren zur Reparatur undichter Fluidleitungen mit einem solchen Verbundschlauch.

Aus der DE 10 2015 105 668 A1 ist bereits ein Verbundschlauch zur Auskleidung und damit zur Reparatur von undicht gewordenen, also defekten Fluidleitungen bekannt, bei dem ein vollständig mit einer Folie umschlossenes, schlauchförmiges, mittels eines Strickverfahrens oder mittels eines Webverfahrens hergestelltes und mit einem aushärtbaren Harz getränktes Fasertextil zum Einsatz kommt. Gemäß dem Offenbarungsgehalt dieser Druckschrift wird für die Herstellung des Verbundschlauches ein Fasertextil aus oder mit Naturfasern eingesetzt. Derartige Verbundschläuche sind für eine Lebensdauer von wenigstens 50 Jahren ausgelegt. Unabhängig davon kann es vorkommen, dass ein in einer bereits sanierten Fluidleitungen vorhandener Verbundschlauch ausgetauscht werden muss. Dabei hat es sich als nachteilig herausgestellt, dass die Aufbereitung beziehungsweise das Recycling derartiger Verbundschläuche wegen der bislang zum Einsatz kommenden Materialien sich äußerst schwierig, aufwendig und kostenintensiv gestaltet.

In der DE 10 2012 110 265 A1 wird erwähnt, dass das zum Einsatz kommende Fasertextil aus natürlichen Fasern bestehen und zur Verbesserung der Verbindung mit der das Fasertextil umschließenden Folie mit einem Haftvermittler versehen sein kann. Nähere Informationen sind der Schrift jedoch nicht zu entnehmen.

Der Erfindung liegt die Aufgabe zugrunde, einen Verbundschlauch bereitzustellen, der auf möglichst einfache Weise recycelbar ist und somit umweltschonend aufbereitet werden kann.

Die Erfindung löst diese Aufgabenstellung mit den Merkmalen der unabhängigen Patentansprüche 1, 10 und 17. Weitere Ausgestaltungen der Erfindung sind Gegenstand der sich jeweils anschließenden Unteransprüche.

Ein Verbundschlauch zur Auskleidung von Fluidleitungen, umfassend ein vollständig mit einer Folie umschlossenes, schlauchförmiges, mittels eines Strickverfahrens oder Webverfahrens hergestelltes und mit einem aushärtbaren Harz getränktes Fasertextil, wurde erfindungsgemäß dahingehend weitergebildet, dass das Fasertextil aus Naturfasern, wie Hanffasern, Sisalfasern, Leinenfasern, Kokosfasern, Kenaf-Fasern, cellulotische Fasern, Recyclingfasern aus Alttextilien oder Mischgarnen oder aus recyclingfähigen Chemiefasern, wie beispielsweise Viskose-, Modal- oder Lycocell-Fasern besteht oder diese aufweist.

Der maßgebliche Vorteil der erfindungsgemäßen Lösung ist darin zu sehen, dass durch die Verwendung natürlicher Fasermaterialien zur Herstellung des Verbundschlauches eine vereinfachte Entsorgung möglich wird, was dazu führt, dass eine Deponieentsorgung nicht mehr erforderlich ist und die CO2 Bilanz des Gesamtprodukts sich sehr wesentlich reduziert. Als Naturfasern wird in besonders bevorzugter Weise Hanf mit seinen unterschiedlichen Auflösungsgraden (Bast etc.) verwendet, wobei auch weitere Naturfasern, wie Leinen, Kokos, Sisal zum Einsatz gebracht werden können. Ebenso eigen sich jedoch auch künstlich hergestellte cellulotische Fasen wie zum Beispiel Tencel, Viscose oder andere. Ein weiterer Vorzug der Erfindung ist in der Verwendung des bevorzugt zum Einsatz kommenden Strickverfahrens zu sehen, durch das beispielsweise Wellenstrukturen, Intarsiastrukturen, Fangstrukturen oder formgestrickte Ansatzstrukturen erzeugt werden können, die für den erfindungsgemäßen Verbundschlauch eine ganz wesentliche Verbesserung hinsichtlich seiner Einbringung in die zu sanierende Fluidleitung mit sich bringen. Selbstverständlich können auch andere Fasertextilien zum Einsatz kommen. Insbesondere kann auch ein strukturiertes oder unstrukturiertes Vlies oder eine Filzmaterial aus den Naturfasern Verwendung finden.

Dem grundlegenden Gedanken der Erfindung folgend, einen möglichst vollständig recycelbaren Verbundschlauch bereitzustellen, geht eine erste Ausgestaltung der Erfindung dahin, dass die Folie aus mindestens einem biologisch abbaubaren Werkstoff besteht. Diese Eigenschaft der Folie ist jedoch nicht dahingehend zu verstehen, dass die in die sanierte Fluidleitung eingebrachte, in der sanierten Fluidleitung die mit dem Fluid beaufschlagte Innenseite bildende Folie sich selbstständig abbaut. Vielmehr muss diese Folie den in der Fluidleitungen strömenden Medien über einen langen Lebensdauerzyklus hinweg standhalten. Dieser Zyklus kann 50 Jahre oder mehr betragen. Unter dem genannten Aspekt ist vielmehr zu verstehen, dass die Folie zum Zwecke des Recycelns beispielsweise durch Zugabe geeigneter Präparate oder biologischer Materialien möglichst vollständig zersetzt werden kann.

Zur Herstellung des Verbundschlauches kann die im noch nicht in die Fluidleitung eingesetzten Zustand zunächst außen um das Fasertextil herum angeordnete Folie ein nahtfreier, geschlossener Schlauch sein oder einen Überlappungsbereich aufweisen, bei dem ein Abschnitt der Innenoberfläche der Folie auf einem korrespondierenden Abschnitt der Außenoberfläche der Folie aufliegt und die Oberflächenabschnitte der Folie in dem dadurch gebildeten Überlappungsbereich der Oberflächen stoffschlüssig miteinander verbunden sind. Wird als Folie ein nahtfreier, geschlossener Schlauch verwendet, so kann dieser beispielsweise durch ein Blasfolienverfahren gefertigt werden.

Eine sehr wesentliche Verbesserung der Verarbeitung der Naturfasern kann ferner dadurch erreicht werden, dass die Naturfasern in einem teilaufgelösten Zustand zur Herstellung des Fasertextils vorliegen oder derartige Naturfasern in dem Fasertextil enthalten sind. Kommt beispielsweise der eingangs bereits erwähnte Hanf zum Einsatz, so ist hier ein teilaufgelöster Zustand des Hanfes Bast, der mit dem Basismaterial Hanf verbunden oder in diesen integriert sein kann. Dadurch wird ein komplexes Fasertextil gebildet, welches in verbesserter Weise in der Lage ist, das Harz aufzunehmen.

Dementsprechend geht eine Ausgestaltung der Erfindung dahin, dass die zu einem Schlauch gestrickten Naturfasern mindestens eine zusätzliche Faserschicht in Form einer Wirrlage oder eines zusätzlichen Gestricks aus anderen oder gleichartigen Naturfasern aufweist, bei dem es sich um den zuvor erwähnten Bast handeln kann. Auch diese Maßnahme verbessert die Aufnahme des Harzes durch die Naturfasern.

Als sehr vorteilhaft ist ferner eine Weiterbildung der Erfindung anzusehen, die darin besteht, dass zur Verbesserung der Harzaufnahme die Naturfasern mit einem Haftvermittler versehen sind. Die Naturfaser kann dabei mit dem Haftvermittler beschichtet oder getränkt werden, wobei im zuletzt genannten Fall der Haftvermittler vollständig in die Naturfaser eindringt. Als Beispiel für einen einsetzbaren Haftvermittler sei an dieser Stelle "Silan" genannt. Darüber hinaus kann beispielsweise Polypropylen verwendet werden, welches eine chemische Bindung zwischen Faser und Haftvermittler generiert. Andererseits dient Polypropylen einer physikalischen Wechselwirkung mit der umgebenden Matrix. Das bevorzugt mit Maleinsäureanhydrid gepfropfte Polypropylen (MAPP) und ein mit Maleinsäureanhydrid gepfropftes Poly(ethylenoctan) (MAPOE) können zudem als Kopplungsmittel zur Modifizierung der Matrizen verwendet werden. Durch die Zugabe des MAPP-Kopplungsmittels wird eine höhere Grenzflächenbindung erreicht.

Ein weiterer, sehr wesentlicher Aspekt der Erfindung besteht ferner darin, dass auch das Harz ein biologisch abbaubares oder thermisch verwertbares, mittels UV-Licht oder thermischer Behandlung aushärtbares Ein- oder Mehrkomponentenharz ist. Als Beispiele für derartige Harze seien an dieser Stelle Epoxidharze, Polyesterharze, Vinylesertharze genannt.

Dem Wesen der vorliegenden Erfindung folgend, wird davon ausgegangen, dass der Verbundschlauch insgesamt mechanisch, thermisch oder chemisch in seine Ausgangskomponenten zerlegbar oder vollständig thermisch abbaubar ist.

Das erfindungsgemäße Verfahren zur Herstellung eines Verbundschlauches ist durch folgende Verfahrensschritte gekennzeichnet:
- Herstellung einer Faser aus einer Naturfaser, wie Hanf als Basisfaser, durch Parallelisierung der Basisfasern, anschließendem Verzug und nachfolgender Verarbeitung zu einer Schnur oder zu einer garnartigen Struktur mittels eines Spinnverfahrens sowie abschließender Herstellung eines Zwirns oder einer garnartigen Struktur aus mehreren Schnüren,
- Stricken eines Schlauches mittels eines Rundstrickverfahrens, mittels eines Flachstrickverfahrens oder mittels eines Flach- oder Rundwirkverfahrens aus diesen Schnüren oder garnartigen Strukturen und
- Bereitstellung der Folie und Aufnahme des gestrickten Schlauches in die Folie, sodass diese den Schlauch vollständig umhüllt.

Der mittels des genannten Verfahrens hergestellte Verbundschlauch besticht durch seinen einfachen Aufbau und die Eigenschaft vollständig recycelbar oder vollständig thermisch verwertbar zu sein. Durch den einfachen Aufbau ist der Verbundschlauch kostengünstig zu fertigen und damit auch aus wirtschaftlicher Sicht von erheblichem Vorteil.

Eine Ausgestaltung des Verfahrens sieht vor, dass die Fasern parallel zueinander aber unverdreht verstrickt werden, wobei der zum Einsatz kommende Hanf in Form von Hanfbast eine Länge von 80 mm bis 200 mm, vorzugsweise 150 mm aufweist. Der Hanfbast stellt eine Zwischenstufe in der Erzeugung der Hanffaser dar. Er besteht aus strohartigen Faserbündeln, die erfindungsgemäß eine Länge von bis zu 200 mm aufweisen können. Durch den Zusammenhalt mehrerer Fasern im Bastbündel und die genannte Länge der Fasern auf der Bais der ohnehin hohen Reißfestigkeit lassen sich daraus sehr reißfeste seil- oder schnurartige Strukturen erzeugen. Dabei werden die Bastfasern grob parallelisiert, verzogen und mit einer Spindel entweder mit oder ohne Hilfsfaden zu einer Schnur verdreht. In einem weiteren Schritt werden dann die Schnüre zur Vergleichmäßigung zu einem Zwirn verdreht, wie dies zuvor bereits beschrieben wurde. Diese Schnüre/Zwirne werden dann auf Rundstrickmaschinen zu Schläuchen verstrickt.

Das Verfahren zur Aufbereitung des Hanfes gestaltet sich dabei wie folgt:
- Entholzen des Hanfstrohs und Trennung der Hanffasern vom Bast- und Holzanteil,
- Reinigen der Hanffasern, wobei die noch verbleibenden Bast- und Holzanteile von den Fasern entfernt werden,
- Öffnen der Hanffasern, indem grobe Faserbündel mechanisch in feinere aufgespalten werden, die den teilaufgelösten Hanf (Hanfbast) darstellen.

Zur Verbesserung der Stabilität des Schlauches geht eine weiterführende Maßnahme der Erfindung dahin, dass das Stricken der Naturfasern unter Zwischenfügung mindestens eines Hilfsfadens erfolgt.

Die Verbindung des gestrickten Schlauches mit dem Harz lässt sich verbessern, wenn die Naturfasern einen Avivage-Auftrag erhalten. Ein derartiger Auftrag dient dabei der Haftvermittlung zwischen Faser und Harzmatrix. Ziel der Avivage ist es zudem, den hydrophilen Charakter zu verringern. Dadurch wird eine chemische Bindung zwischen den Kopplungsmitteln und den Hanffasern erreicht.

Durch die Bindung von Luft in der Hanffaser kann möglicherweise ebenfalls eine Verbesserung mit dem Harz zum Tränken des Verbundschlauches erreicht werden.

Als weiterführender Vorschlag der Erfindung ist es ferner anzusehen, dass die Naturfasern mit einem zusätzlichen Haftvermittler zur Verbesserung der Verbindung mit dem Harz versehen werden, bevor der gestrickte Schlauch mit dem Harz getränkt wird. Dabei gibt es folgende technologische Unterscheidungen:
- der Haftvermittler dringt in die Hanffaser oder das Hanfbast ein und quillt damit die Faser auf
   oder
- der Haftvermittler dringt nicht in die Hanffaser oder das Hanfbast ein und bildet damit eine Art Oberflächenbeschichtung der Naturfaser. Die Verbindung mit dem Harz oder die Haftung des Harzes wird in jedem Fall durch die Oberflächenstruktur der Naturfaser begünstigt, da hier nicht nur ein reiner Reibschluss, wie bei einer glatten Oberfläche, sondern durch die diffuse Oberfläche auch ein Formschluss erfolgt.

Eine ausgestaltende Maßnahme zur Verbesserung des Verfahrens zur Herstellung eines Verbundschlauches besteht darüber hinaus darin, dass die Naturfasern vor ihrer Bearbeitung durch ein Spinnverfahren aufgebauscht werden. Das Aufbauschen optimiert dabei die Einbindung des Harzes.

Zur Reparatur undichter Fluidleitungen mit einem zuvor beschriebenen Verbundschlauch, der durch das ebenfalls zuvor beschriebene Verfahren hergestellt wurde, werden folgende Verfahrensschritte vorgeschlagen:
- Herstellung einer Öffnung der Fluidleitung,
- Bereitstellung einer für die Reparatur erforderlichen Länge des Verbundschlauches, bestehend aus einem vollständig mit einer Folie umschlossenen, schlauchförmigen, mittels eines Strickverfahrens hergestellten und mit einem aushärtbaren Harz getränkten Fasertextil, das aus Naturfasern besteht oder diese aufweist, wobei das Fasertextil zunächst mit einem ungesättigten Ein- oder Mehrkomponentenharz getränkt wird, welches durch eine thermische oder durch eine UV-Lichtbestrahlung aushärtbar ist,
- Fixierung eines offenen Endes des Verbundschlauches an einer Inversiervorrichtung,
- Herstellung einer abgedichteten Verbindung zwischen der Öffnung der Fluidleitung und dem Verbundschlauch,
- Einziehen des Verbundschlauches in die Fluidleitung oder Beaufschlagung des Verbundschlauches mit einem in der Inversiervorrichtung erzeugten Überdruck und dadurch bewirktes Einbringen des Verbundschlauches in die zu reparierende Fluidleitung, wobei sich der Verbundschlauch infolge des gegebenen Druckes unmittelbar an die Innenoberfläche der Fluidleitung anlegt,
- mindestens einmalig Erzeugung einer Temperaturerhöhung oder einer UV-Lichtbestrahlung über die gesamte Länge des Verbundschlauches mittels eines wenigstens einmal durch den Verbundschlauch geführten Thermoelements oder mittels eines UV-Strahlers, sodass das Ein- oder Mehrkomponentenharz aushärtet.

Bei der Verarbeitung des Harzes und der Einbringung des Verbundschlauches in die zu sanierende Fluidleitungen ist es von Bedeutung, dass möglichst wenig Luft in dem Harz enthalten ist, da dieses später zu Beschädigungen des Verbundschlauches innerhalb der Fluidleitung führen kann. Deshalb wird dem Harz vor seiner Einbringung oder während der Einbringung in die Naturfaser mittels eines Vakuums die Luft entzogen.

Zur Erleichterung des Einziehens des Verbundschlauches in die Fluidleitung kann die zu reparierende Fluidleitung vor Beginn der Sanierung zudem mit einer Schutzfolie, einem so genannten "Preliner" ausgekleidet werden.

Die Erfindung wird nachfolgend anhand der beigefügten Zeichnungen näher erläutert. Das gezeigte Ausführungsbeispiel stellt dabei keine Einschränkung auf die dargestellte Variante dar, sondern dient lediglich der Erläuterung eines Prinzips der Erfindung.

Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.
- Figur 1:: beispielhaft einen Querschnitt durch einen Verbundschlauch,
- Figur 2:: einen Längsschnitt durch einen Teil der zu reparierenden Fluidleitung und durch einen Teil einer Inversiervorrichtung und
- Figur 3:: einen Schnitt durch eine reparierte Fluidleitung während einer UV-Licht-Bestrahlung.

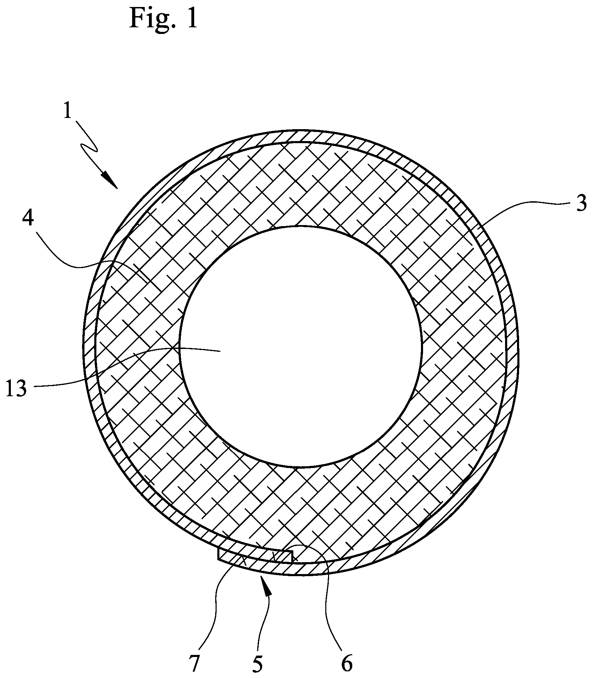

Der in der Figur 1 dargestellte Querschnitt durch einen Verbundschlauch 1 zeigt in anschaulicher Weise dessen grundlegenden Aufbau. Der Verbundschlauch 1 besteht aus einem Fasertextil 4 aus oder mit Naturfasern, das in einer dieses vollständig aufnehmenden Folie 3 eingeschlossen ist. Das Fasertextil 4 aus oder mit Naturfasern besteht vorliegend aus einem durch ein Rundstrickverfahren hergestellten Schlauch. Zur Herstellung einer stoffschlüssigen Verbindung zwischen der Folie 3 und dem Fasertextil 4 aus oder mit Naturfasern kann zum Beispiel ein thermisch beaufschlagtes Walzverfahren zum Einsatz kommen. In dem in Figur 1 gezeigten Beispiel weist der Verbundschlauch 1 ferner einen Überlappungsbereich 5 auf. Der Überlappungsbereich 5 wird durch einen Abschnitt 6 der Innenoberfläche der Folie 3 gebildet, der auf einem korrespondierenden Abschnitt 7 der Außenoberfläche der Folie 3 zur Anlage kommt, wenn die Folie 3 vollständig um das Fasertextil 4 aus oder mit Naturfasern herumgewickelt ist. In diesem Überlappungsbereich 5 werden die aufeinander liegenden Abschnitte 6, 7 der Folie 3 ebenfalls mittels einer stoffschlüssigen Verbindung verbunden, wozu im vorliegenden Beispiel ein thermoplastischer Klebefilm mit einem Schmelzbereich oberhalb von 115°C zum Einsatz kommt, der durch ein Ultraschall-Siegelverfahren aufgeschmolzen wird und dadurch die stoffschlüssige Verbindung herstellt. Durch diese Verbindung wird gleichzeitig eine Abdichtung im Überlappungsbereich 5 erreicht. Der Verbundschlauch 1 weist zudem einen Innenhohlraum 13 auf, der jedoch nicht dem Durchlassquerschnitt der Fluidleitung 2 entspricht, da beim Einbringen des Verbundschlauches 1 in die Fluidleitung 2 der Verbundschlauch 1 umgekrempelt wird.

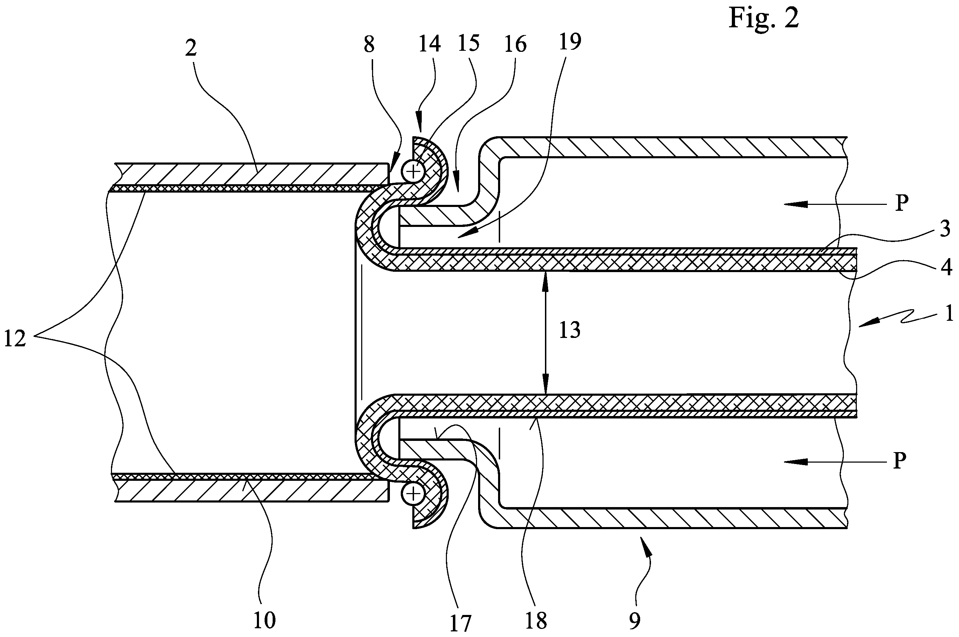

Anhand der Schnittdarstellung der Figur 2 lässt sich das Verfahren zur Reparatur einer Fluidleitung 2 anschaulich beschreiben. Zur Durchführung des Reparaturverfahrens der Fluidleitung 2 wird diese vor einer Befahrung mit einer Kamera und einer Vermessung der zu reparierenden Stellen mit einer Öffnung 8 versehen, durch die später auch der Verbundschlauch 1 in die Fluidleitung 2 eingebracht werden kann. Vor der Einbringung des Verbundschlauches 1 in die Fluifleitung 2 wird diese jedoch zunächst mit einer Schutzfolie 12, einem so genannten "Preliner" ausgekleidet. Zur Einbringung des Verbundschlauches 1 in die Fluidleitung 2 wird anschließend ein offenes Ende des Verbundschlauches 1 an einer Inversiervorrichtung 9 angesetzt, so dass dieser in dem genannten Abschnitt einen Stülpbereich 14 bildet. Die Inversiervorrichtung 9 weist zum Ansetzen des Stülpbereiches 14 des Verbundschlauches 1 einen Flanschabschnitt 16 auf. Zur Fixierung des Stülpbereiches 14 an dem Flanschabschnitt 16 der Inversiervorrichtung 9 wurde bei dem in Figur 2 dargestellten Beispiel ein Spannmittel 15 verwendet, bei dem es sich vorliegend um eine einfache Spannschelle handelt. Innerhalb der Inversiervorrichtung 9 ist bei dieser Art der Befestigung des Verbundschlauches 1 ein Spaltabstand 19 zwischen der Innenoberfläche 17 des Flanschabschnittes 16 und der Außenoberfläche 18 des Verbundschlauches 1 gegeben, der von Nutzen ist, um einen Druck p über die Inversiervorrichtung 9 in das verspannte Ende des Verbundschlauches 1 einzubringen. Dies führt dazu, dass der Verbundschlauch 1 in die Fluidleitung 2 eingeblasen werden kann. Dabei wird der angelegte Druck p solange aufrechterhalten, bis das vorab in das Fasertextil 4 aus oder mit Naturfasern eingebrachte Polyesterharz durch eine Bestrahlung mit UV-Licht vollständig ausgehärtet ist.

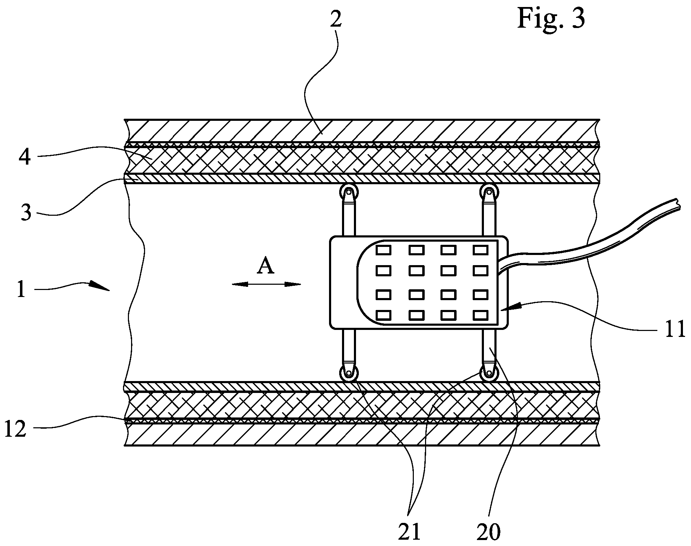

Der Vorgang der Aushärtung des Polyesterharzes im Fasertextil 4 aus oder mit Naturfasern ist in der Figur 3 gezeigt. Aus dieser Darstellung kann entnommen werden, dass der durch den aufgebrachten Druck p umgekrempelte Verbundschlauch 1 nunmehr mit seinem Fasertextil 4 aus oder mit Naturfasern an der Innenoberfläche 10 der Fluidleitung 2 anliegt, während die UVlichtdurchlässige Folie 3 die Innenoberfläche der zu reparierenden Fluidleitung 2 bildet. In diesem Zustand wird zunächst der über die Inversiervorrichtung 9 aufgebrachte Druck p aufrechterhalten, so dass eine unmittelbare, faltenfreie Anlage des Verbundschlauches 1 an der gesamten Innenoberfläche 10 der Fluidleitung 2 erhalten bleibt. Da das zum Einsatz kommende Polyesterharz durch eine Bestrahlung mit UV-Licht aushärtet, erfolgt eine Bestrahlung mittels eines UV-Strahlers 11, in Form einer mit LED's bestückten UV-Lampe, die durch die Fluidleitung 2 geführt wird. Dabei ist aufgrund der Intensität der zum Einsatz kommenden LED's in der Regel eine einmalige Bestrahlung ausreichend, um das in dem Fasertextil 4 aus oder mit Naturfasern vorhandene Polyesterharz vollständig auszuhärten. Der UV-Strahler 11 ist dabei in einem fahrbaren Gestell 20 aufgenommen, dessen Beweglichkeit innerhalb der Fluidleitung 2 durch geeignete Rollkörper 21 gewährleistet wird und dessen Bewegungsrichtung innerhalb der Fluidleitung 2 in der Figur 3 durch den Doppelpfeil "A" symbolisiert ist. Zum Abschluss der Sanierung der Fluidleitung 2 erfolgt erforderlichenfalls ein Auftrennen vorhandener Abzweigungen der Fluidleitung 2 mit einem Schneidroboter, so dass eine ungehinderte Fluidströmung innerhalb des vorhandenen Strömungsleitungssystems weiterhin gegeben ist. Nachdem auch dieser Vorgang beendet ist, kann die Öffnung 8 der auf diese Weise reparierten Fluidleitung 2 wieder verschlossen werden.

### BEZUGSZEICHENLISTE:

- 1: Verbundschlauch
- 2: Fluidleitung
- 3: Folie
- 4: Fasertextil aus oder mit Naturfasern
- 5: Überlappungsbereich
- 6: Abschnitt der Innenoberfläche (der Folie)
- 7: Abschnitt der Außenoberfläche (der Folie)
- 8: Öffnung (der Fluidleitung)
- 9: Inversiervorrichtung
- 10: Innenoberfläche (der Fluidleitung)
- 11: UV-Strahler
- 12: Schutzfolie (Preliner)
- 13: Innenhohlraum des Verbundschlauches
- 14: Stülpbereich
- 15: Spannmittel
- 16: Flanschabschnitt
- 17: Innenoberfläche des Flanscabschnittes
- 18: Außenoberfläche des Verbundschlauches
- 19: Spaltabstand
- 20: Gestell
- 21: Rollkörper

## Patentansprüche

1. Verbundschlauch (1) zur Auskleidung von Fluidleitungen (2), umfassend ein vollständig mit einer Folie (3) umschlossenes, schlauchförmiges, mittels eines Strickverfahrens oder Webverfahrens hergestelltes und mit einem aushärtbaren Harz getränktes Fasertextil (4),
**dadurch gekennzeichnet, dass**
das Fasertextil (4) aus Naturfasern, wie Hanffasern, Sisalfasern, Leinenfasern, Kokosfasern, Kenaf-Fasern, cellulotische Fasern, Recyclingfasern aus Alttextilien oder Mischgarnen oder aus recyclingfähigen Chemiefasern, wie Viskose-, Modal- oder Lycocell-Fasern besteht oder diese aufweist.

2. Verbundschlauch nach Anspruch 1,
**dadurch gekennzeichnet, dass**
die Folie (3) aus mindestens einem biologisch abbaubaren Werkstoff besteht.

3. Verbundschlauch nach einem der vorstehend genannten Ansprüche,
**dadurch gekennzeichnet, dass**
die um das Fasertextil (4) herum angeordnete Folie (3) ein nahtfreier, geschlossener Schlauch ist oder einen Überlappungsbereich (5) aufweist, bei dem ein Abschnitt (6) der Innenoberfläche der Folie (3) auf einem korrespondierenden Abschnitt (7) der Außenoberfläche der Folie (3) aufliegt und die Oberflächenabschnitte der Folie in dem dadurch gebildeten Überlappungsbereich (5) der Oberflächen stoffschlüssig miteinander verbunden sind.

4. Verbundschlauch nach Anspruch 3,
**dadurch gekennzeichnet, dass**
die Folie (3) in dem Überlappungsbereich (5) einen Klebefilm aufweist oder durch ein Ultraschall- und/oder Wärmeimpuls-Siegelverfahren dichtend verschlossen ist.

5. Verbundschlauch nach einem der vorstehend genannten Ansprüche,
**dadurch gekennzeichnet, dass**
die Naturfasern in einem teilaufgelösten Zustand zur Herstellung des Fasertextils (3) vorliegen oder derartige Naturfasern in dem Fasertextil (3) enthalten sind.

6. Verbundschlauch nach einem der vorstehend genannten Ansprüche,
**dadurch gekennzeichnet, dass**
die zu einem Schlauch gestrickten Naturfasern mindestens eine zusätzliche Faserschicht in Form einer Wirrlage oder eines zusätzlichen Gestricks aus Naturfasern aufweist.

7. Verbundschlauch nach einem der vorstehend genannten Ansprüche,
**dadurch gekennzeichnet, dass**
die Naturfasern mit einem Haftvermittler zur Verbesserung der Verbindung mit dem Harz versehen sind.

8. Verbundschlauch nach einem der vorstehend genannten Ansprüche,
**dadurch gekennzeichnet, dass**
das Harz ein biologisch abbaubares oder thermisch verwertbares, mittels UV-Licht oder thermischer Behandlung aushärtbares Ein- oder Mehrkomponentenharz ist.

9. Verbundschlauch nach einem der vorstehend genannten Ansprüche,
**dadurch gekennzeichnet, dass**
der Verbundschlauch (1) insgesamt mechanisch, thermisch oder chemisch in seine Ausgangskomponenten zerlegbar oder vollständig thermisch abbaubar ist.

10. Verfahren zur Herstellung eines Verbundschlauches nach einem der vorstehend genannten Ansprüche,
**gekennzeichnet durch** folgende Verfahrensschritte:
- Herstellung eines Fasertextils (4) aus einer Naturfasern, wie Hanfbast, als Basisfaser, durch Parallelisierung der Basisfasern, anschließendem Verzug und nachfolgender Verarbeitung zu einer Schnur oder zu einer garnartigen Struktur mittels eines Spinnverfahrens sowie abschließender Herstellung eines Zwirns oder einer garnartigen Struktur aus mehreren Schnüren,
- Stricken eines Schlauches mittels eines Rundstrickverfahrens, mittels eines Flachstrickverfahrens oder mittels eines Flach- oder Rundwirkverfahrens aus diesen Schnüren oder garnartigen Strukturen,
- Bereitstellung einer Folie (3) und Aufnahme des gestrickten Schlauches in die Folie (3), sodass diese den Schlauch vollständig umhüllt.

11. Verfahren nach Anspruch 10,
**dadurch gekennzeichnet, dass**
die Naturfasern parallel zueinander aber unverdreht verstrickt werden.

12. Verfahren nach Anspruch 10 oder 11,
**dadurch gekennzeichnet, dass**
der zum Einsatz kommende Hanfbast eine Länge von 80 mm bis 200 mm, vorzugsweise 150 mm aufweist.

13. Verfahren nach einem der Ansprüche 10 bis 12,
**dadurch gekennzeichnet, dass**
das Stricken unter Zwischenfügung mindestens eines Hilfsfadens erfolgt.

14. Verfahren nach einem der Ansprüche 10 bis 13,
**dadurch gekennzeichnet, dass**
vor dem Stricken des Schlauches die Naturfasern einen Avivage-Auftrag erhalten.

15. Verfahren nach einem der Ansprüche 10 bis 14,
**dadurch gekennzeichnet, dass**
die Naturfasern mit einem Haftvermittler zur Verbesserung der Verbindung mit dem Harz versehen werden, bevor der gestrickte Schlauch mit dem Harz getränkt wird.

16. Verfahren nach einem der Ansprüche 10 bis 15,
**dadurch gekennzeichnet, dass**
die Naturfasern vor ihrer Bearbeitung durch ein Spinnverfahren aufgebauscht werden.

17. Verfahren zur Reparatur undichter Fluidleitungen mit einem Verbundschlauch nach einem der Ansprüche 1-9, hergestellt durch ein Verfahren nach einem der Ansprüche 10-16,
**gekennzeichnet durch** die Verfahrensschritte:
- Herstellung einer Öffnung (8) der Fluidleitung (2),
- Bereitstellung einer für die Reparatur erforderlichen Länge des Verbundschlauches (1), bestehend aus einem vollständig mit einer Folie (3) umschlossenen, schlauchförmigen, mittels eines Strickverfahrens hergestellten und mit einem aushärtbaren Harz getränkten Fasertextil (4), das aus Naturfasern besteht oder diese aufweist, wobei das Fasertextil (4) zunächst mit einem ungesättigten Ein- oder Mehrkomponentenharz getränkt wird, welches durch eine thermische oder durch eine UV-Lichtbestrahlung aushärtbar ist,
- Fixierung eines offenen Endes des Verbundschlauches (1) an einer Inversiervorrichtung (9),
- Herstellung einer abgedichteten Verbindung zwischen der Öffnung (8) der Fluidleitung (2) und dem Ende des Verbundschlauches (1),
- Einziehen des Verbundschlauches (1) in die Fluidleitung (2) oder Beaufschlagung des Verbundschlauches (1) mit einem in der Inversiervorrichtung (9) erzeugten Überdruck und dadurch bewirktes Einbringen des Verbundschlauches (1) in die zu reparierende Fluidleitung (2), wobei sich der Verbundschlauch (1) infolge des gegebenen Druckes unmittelbar an die Innenoberfläche (10) der Fluidleitung (2) anlegt,
- mindestens einmalig Erzeugung einer Temperaturerhöhung oder einer UV-Lichtbestrahlung über die gesamte Länge des Verbundschlauches (1) mittels eines wenigstens einmal durch den Verbundschlauch (1) geführten Thermoelements oder mittels eines UV-Strahlers (11), sodass das Ein- oder Mehrkomponentenharz aushärtet.

18. Verfahren zur Reparatur undichter Fluidleitungen nach Anspruch 17,
**dadurch gekennzeichnet, dass**
die zu reparierende Fluidleitung (2) vor Beginn der Sanierung mit einer Schutzfolie (Preliner) (12) ausgekleidet wird.
